# EUROPÄISCHE PATENTSCHRIFT

(11) **EP 2 979 100 B1**
(45) Veröffentlichungstag und Bekanntmachung des Hinweises auf die Patenterteilung: **30.11.2022**
(21) Anmeldenummer: 14713050.4
(22) Anmeldetag: 14.03.2014
(51) Int. Cl.: G06F 21/86, G06F 21/55, G06F 21/57, G01R 31/28, H01L 23/00, H05K 1/02, H01R 13/639

(54) **VORRICHTUNG UND VERFAHREN MIT EINEM TRÄGER MIT SCHALTUNGSSTRUKTUREN**
DEVICE AND METHOD HAVING A CARRIER HAVING CIRCUIT STRUCTURES
DISPOSITIF ET PROCÉDÉ AVEC UN SUPPORT PRÉSENTANT DES STRUCTURES DE COMMUTATION

(30) Priorität: 28.03.2013 DE 102013205729
(43) Veröffentlichungstag der Anmeldung: 03.02.2016
(73) Patentinhaber: Fraunhofer-Gesellschaft zur Förderung der angewandten Forschung e.V., 80686 München (DE)
(72) Erfinder: HENNIG, Maxim, 85748 Garching bei München (DE); SCHIMMEL, Oliver, 81371 München (DE); ZIERIS, Philipp, 81371 München (DE); FILIPOVIC, Bartol, 85386 Eching (DE)
(74) Vertreter: Stöckeler, Ferdinand
(86) Internationale Anmeldenummer: PCT/EP2014/055123
(87) Internationale Veröffentlichungsnummer: WO 2014/154504

(56) Entgegenhaltungen:
- EP-A1- 1 670 059
- EP-A1- 2 405 540
- EP-A1- 2 426 616
- EP-A2- 1 273 997
- WO-A1-2007/019642
- WO-A2-2007/116355
- WO-A2-2011/128778
- US-A1- 2001 033 012
- US-A1- 2006 231 633
- US-B1- 6 983 378

## Beschreibung

Die vorliegende Erfindung bezieht sich auf Vorrichtungen und Verfahren, die es ermöglichen, zu beurteilen, ob ein unberechtigter Zugriff auf eine Komponente stattgefunden hat, abhängig davon, ob eine Messung bezüglich Schaltungsstrukturen ein erwartetes Ergebnis liefert.

In der heutigen Zeit gibt es Schutzsiegel oder Kopierschutzsysteme in diversen Variationen und für unterschiedliche Anwendungsfälle. Das Nachahmen oder Klonen elektronischer Produkte wird dabei allerdings nur selten verhindert, da ein Siegelbruch oder das Umgehen eines Kopierschutzes meist nur visuell und lokal nachgewiesen werden kann. Eine Deaktivierung der Funktionalität des Produkts nach einem Siegelbruch ist zudem meist nicht realisiert oder kann durch "Reverse Engineering"-Maßnahmen leicht umgangen werden.

Eingebettete Systeme sind durch ihre anwendungsspezifische Optimierung, welche oftmals zulasten von Schutzmechanismen ausfällt, anfällig für Produktpiraterie, bei der das Produkt ohne großen Aufwand nachgeahmt oder gar 1:1 nachgebaut wird. Ein Produktfälscher wird in einem Produkt-Teardown das System Stück für Stück in seine Einzelteile zerlegen und die verwendeten Bauteile identifizieren, daraufhin eine Systemanalyse durchführen und eine Schaltung mit gleichen oder äquivalenten Bauteilen nachbauen. Die benötigte Firmware kann aus dem Original ausgelesen und in den Nachbau eingespielt werden, wie es in [6] und [2] beschrieben wird. Die Firmware ist das eigentliche Herzstück des Systems. Sie erweckt das Produkt zum Leben und beinhaltet deshalb in der Regel das meiste Know-how. Der Schutz der Firmware steht somit oftmals im Vordergrund.

Bekannte Schutzmechanismen versuchen beispielsweise das Produkt-Teardown durch eine Entfernung von Markierungen und Aufdrucken auf den verwendeten Einzelteilen zu verhindern, indem diese beispielsweise weggelasert werden oder indem die Schaltung mit undurchsichtigem Epoxidharz, Polyurethanharz oder Silikonkautschuk vergossen wird, wie es in [8] beschrieben ist. Diese Maßnahme kann jedoch leicht umgangen werden, indem die Vergussmaße mit chemischen Prozessen abgetragen wird. Steht einem Angreifer ein Röntgengerät zur Verfügung, so kann er damit Chipbeschriftungen durch die Vergussmasse und das Chipgehäuse hindurch auslesen, wie es in [2] beschrieben ist.

Eine weitere bekannte Schutzmethode ist die Shielding-Technik, wie sie unter anderem in [2] und [9] beschrieben wird. Dort wird ein Netz von Leiterbahnen direkt über einen schützenswerten Bereich einer Schaltung oder einer Komponente hinweg gespannt. Das Durchtrennen des Netzes wird von der darunterliegenden Schaltung erkannt, wodurch die Anwendung durch ein bewusstes Zerstören der Firmware deaktiviert wird, wie es in [4], [1] und [3] beschrieben wird. Ein großes Problem bei diesem Vorgehen ist, dass die Schutzvorrichtung immer eine Energieversorgung benötigt. Bei fehlender Energiezufuhr ist der Detektionsmechanismus inaktiv und die Deaktivierung der Anwendung kann nicht erfolgen. Eine erste Abhilfe schafft die Verwendung kryptografischer Schlüssel aus den Widerstandswerten, wie es aus [10] bekannt ist. Jedoch kann das Netz entfernt oder überbrückt werden, um sich direkten Zugriff auf das System zu verschaffen, wie es beispielsweise in [7] beschrieben ist. Zudem können ohmsche Widerstände prinzipiell auch sehr einfach ausgelesen respektive gemessen, entsprechende Schutzschaltungen entfernt und mit anderen Widerständen identischer Werte ersetzt werden, was die Wirkung der Schutzschaltung reduziert.

Um den Schritt der Systemanalyse zu erschweren, werden heutzutage einfache Passwortabfragen, Trusted Platform Modules, Sicherheitsbausteine, sogenannte Secure-Elements, oder Dongle-Lösungen eingesetzt. Damit wird eine Bindung der Firmware an einen Hardwareanker realisiert und eine direkte 1:1-Kopie des Systems erschwert. Diese Maßnahmen können zwar den Schutz erhöhen, ein Manipulieren des Systems aber nicht vollständig verhindern, da Sicherheitsabfragen in der Firmware manipuliert oder übersprungen werden können, Schnittstellen zu den schützenden Bausteinen nicht ausreichend abgesichert sind oder Softwareemulatoren das Vorhandensein eines Dongles vertäuschen, wie es in [2] beschrieben ist.

Ein weiterer bekannter Absicherungsmechanismus für eingebettete Systeme sind Physical Unclonable Functions, PUFs, die in [5] beschrieben werden. Die Idee hinter diesem Mechanismus ist die Absicherung von Hard- und Software durch das Messen und digitale Auswerten von Fertigungstoleranzen, welche anschließend als Identifikationsnummern und/oder kryptografische Schlüssel Verwendung finden. Diese Informationen sind für jeden Baustein einmalig und können nicht nachgebaut werden, wobei PUFs optisch oder elektrisch ausgewertet und verifiziert werden können. Ein Manipulationsschutz ist mit PUFs insofern gegeben, dass sich die physikalischen Eigenschaften bei einem Eingriff in ein abgestimmtes System, wie beispielsweise bei einem Öffnen eines ICs, ändern und somit die extrahierten Informationen verfälschen.

Aktuell beschränkt sich der Einsatz von elektronischen PUFs jedoch weitestgehend auf IC-Bausteine und nicht auf die gesamte Leiterkarte. Sie werden dafür direkt auf den Chip aufgetragen, bevor dieser schließlich in ein Gehäuse gepackt wird. Die Fertigungskosten sind daher oftmals sehr hoch, da in die automatisierten CMOS-Prozesse eingegriffen werden muss. Bereits im Einsatz befindliche Systeme oder einzelne Microcontroller können oftmals nur durch ein Re-Design des gesamten Systems mit diesen Sicherheitsfeatures nachgerüstet werden, was die Kosten für deren Einsatz enorm in die Höhe treibt.

Weitere potenzielle Sicherheitslücken beim Einsatz von Microcontrollern entstehen durch deren Debug- und Programmierschnittstellen, über welche sich die Firmware auslesen und manipulieren lässt. Dies ist insbesondere bei Systemen problematisch, die externe Speicherbausteine zur Ablage der Firmware verwenden. Durch die Nutzung von Reworking-Lötequipment lassen sich diese Speicherbausteine auslöten und mit einem Flash-Programmiergerät auslesen.

Diese Lösungen zur Absicherung von eingebetteten Systemen bieten einzelne und isolierte Maßnahmen wie die Manipulationsdetektion in Form von Shielding oder den Kopierschutz in Form der Bindung der Firmware an Hardwareanker. Eine Lösung, welche in die Richtung einer Kombination aus Manipulationsdetektion und Kopierschutz geht, stellt der Einsatz von PUFs dar. PUFs agieren allerdings nur passiv auf Manipulationen, da lediglich die einzigartigen Informationen verlorengehen. Zudem sind sie in der Herstellung unflexibel und kostenintensiv.

In WO 2007/116355 A2 ist ein Verfahren zum Authentifizieren eines physischen Tokens beschrieben, das messbare Parameter liefert. Ferner ist eine Vorrichtung beschrieben, die ein physisches Token umfasst, das messbare Parameter zur Authentifizierung bereitstellt. Zusammen mit Kapazitätswerten werden rauschkorrigierende Daten, die auch als Hilfsdaten bezeichnet werden, verwendet, um die Antwortdaten mit Rauschbeständigkeit zu versehen.

In US 2001/0033012 A1 ist eine integrierte Schaltungsvorrichtung beschrieben, die Folgendes umfasst: eine Schaltung, die Verschlüsselung verwendet; und eine Einkapselungsverpackungsschicht; wobei die Schaltung auf mindestens einen physikalischen Parameter der Verkapselung anspricht, um die Verschlüsselung und / oder Entschlüsselung durch Lesen des Schlüssels hiervon anzuwenden, so dass eine Manipulation der Verkapselung, um Zugriff auf die Schaltung zu erhalten, dazu führt, dass die Verschlüsselung und / oder Entschlüsselung fehlschlägt.

Die Aufgabe der Erfindung besteht darin, Vorrichtungen und Verfahren zu schaffen, die es ermöglichen, einen unberechtigten Zugriff auf eine Komponente zuverlässig zu erkennen.

Diese Aufgabe wird durch eine Vorrichtung gemäß Anspruch 1 und eine Verfahren gemäß Anspruch 18 gelöst.

Ausführungsbeispiele schaffen eine Vorrichtung, mit folgenden Merkmalen:
einem Träger mit Schaltungsstrukturen, die eine komplexe Impedanz aufweisen;
einer Messeinrichtung, die ausgebildet ist, um die komplexe Impedanz der Schaltungsstrukturen zu einem ersten Zeitpunkt zu messen, um ein erstes Ergebnis zu erhalten, und zu einem späteren, zweiten Zeitpunkt zu messen, um ein zweites Ergebnis zu erhalten;
entweder einer Steuerung, die ausgelegt ist, um abhängig davon, ob das erste Ergebnis mit dem zweiten Ergebnis übereinstimmt, einen Betrieb einer Komponente zu ermöglichen oder zu beurteilen, ob ein unberechtigter Zugriff auf die Komponente stattgefunden hat, oder einer Schnittstelle, die ausgelegt ist, um das erste Ergebnis und das zweite Ergebnis drahtlos zu einer solchen Steuerung zu übermitteln.

Der Kerngedanke der vorliegenden Erfindung besteht darin, erkannt zu haben, dass durch die Messung von komplexen Impedanzen einer Schaltung bereits eine Verformung der Leitungsstrukturen und nicht erst ein Leitungsbruch festgestellt werden kann. Bereits eine Verformung der Schaltungsstrukturen führt zu messbar veränderten Impedanzwerten, sodass hieraus bereits eine die Leitungsstrukturen nicht beschädigende Manipulation erkannt werden kann.

Vorteilhaft an dieser Erfindung ist, dass die Schutzvorrichtung auch in einem ausgeschalteten Zustand nicht umgangen und kostengünstig hergestellt werden kann. Sie verhindert, dass eine gegebenenfalls vorhandene Software oder kritische Informationen unverschlüsselt ausgelesen werden können, da selbst in einem deaktivierten oder stromlosen Zustand schützenswerte Daten in einem verschlüsselten Zustand vorliegen.

Gemäß einem Ausführungsbeispiel wird eine schützenswerte Komponente mit einem Träger mit Schaltungsstrukturen versehen und mit einer Messeinrichtung verbunden, die in der Lage ist, die komplexe Impedanz der Schaltungsstrukturen, welche sich auf dem Träger befinden, zu unterschiedlichen Zeitpunkten zu messen und anhand der Ergebnisse der Messungen eine Steuerung in die Lage zu versetzen, einen Betrieb der schützenswerten Komponente zu ermöglichen oder zu beurteilen, ob ein unberechtigter Zugriff stattgefunden hat. Konkret deckt ein Träger mit Schaltungsstrukturen einen Microcontroller, welcher einen internen RAM- und einen internen Flash-Speicher aufweist, mitsamt seinen Debug- und Programmierschnittstellen ab. Die benötige Schaltung zur Messung einer komplexen Impedanz der Schaltungsstrukturen auf dem Träger befindet sich, wie der Microcontroller, ebenfalls unterhalb des Trägers auf einer Leiterkarte. Lediglich eine speziell abgesicherte Programmierschnittstelle ist ohne Manipulation des Trägers nutzbar. Diese Schnittstelle erlaubt das Programmieren des Microcontrollers, nicht aber das Auslesen von gespeicherten Daten. Somit sind alle kritischen Bereiche, die in diesem Fall durch die Speicherbausteine dargestellt sind, geschützt.

Weitere vorteilhafte Ausführungsformen sind Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: eine schematische Aufsicht einer Vorrichtung mit einem Microcontroller, welcher von einem Träger mit Schaltungsstrukturen bedeckt wird;
- Fig. 2: eine Querschnittansicht einer Vorrichtung, bei der der Träger von einer weiteren Schutzschicht bedeckt ist;
- Fig. 3: eine schematische Darstellung einer Vorrichtung mit einem externen Speicherelement
- Fig. 4: eine Aufsicht auf eine Vorrichtung, bei der Speicherbausteine separat von einem Microcontroller und eine Messschaltung separat von einer Steuerung angeordnet sind;
- Fig. 5: schematische Ansichten eines elektronischen Siegelsystems;
- Fig. 6: schematische Ansichten einer elektronischen Kontaktdetektion;
- Fig.7: schematische Querschnittsdarstellungen von Schaltungsstrukturen, die in das Material eines Trägers eingebettet sind.

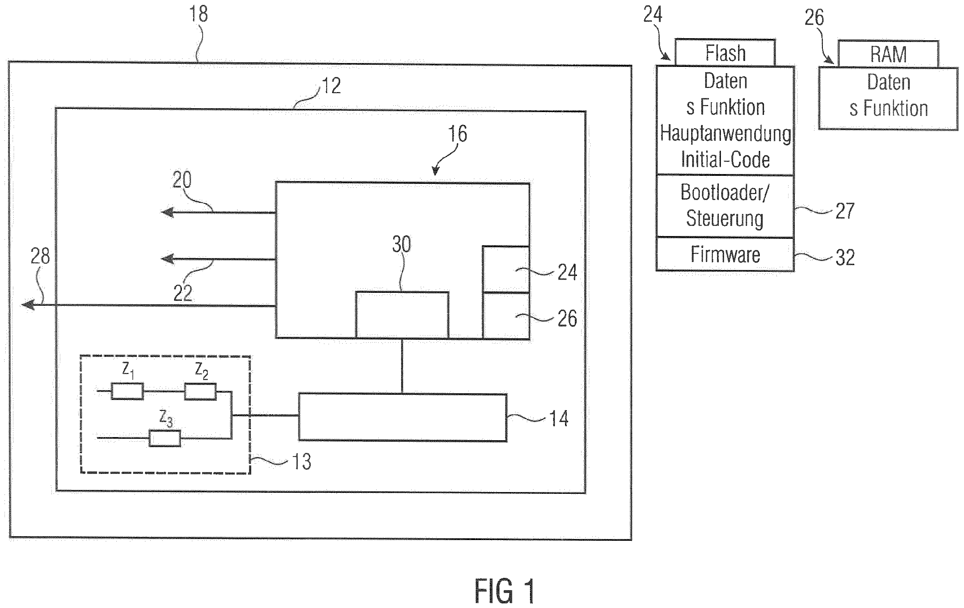

Fig. 1 zeigt eine Vorrichtung 10 mit einem Träger 12 mit Schaltungsstrukturen 13, die eine komplexe Impedanz aufweisen. Eine einfache Ausführung ist beispielsweise in Form von aufgebrachten Leiterbahnen denkbar, welche durch ein Dielektrikum voneinander getrennt sind und als Elektroden für Kapazitätsmessungen dienen. Der Träger 12 mit Schaltungsstrukturen 13, die eine komplexe Impedanz aufweisen, bedeckt eine Messschaltung 14 zur Erfassung der Eigenschaften des Trägers 12 in Form der komplexen Impedanzwerte und die als schützenswert dargestellte Komponente in Form eines Microcontrollers 16, der auf einer Leiterkarte 18 angeordnet ist. Der Microcontroller 16, der die schützenswerte Firmware enthält, kann aus einer Standardklasse, die keine Schutzfunktion gegen ein Auslesen der Firmware besitzt, implementiert sein. Der Microcontroller 16 hat weiterhin eine JTAG (Joint Task Action Group)-Schnittstelle 20 und eine ISP (In System Programmer)-Schnittstelle 22, welche zum Auslesen des Flash-Speichers 24 und des RAM-Speichers 26 verwendet werden können. Diese befinden sich hier jedoch ebenfalls unter dem Träger 12 mit Schaltungsstrukturen 13 und sind somit von außen nicht zugänglich.

Neben oder alternativ zu den Standardkommunikationsschnittstellen können weitere Kommunikationsschnittstellen vorgesehen sein, beispielsweise USB-Schnittstellen. Der Microcontroller 16 verfügt ferner über eine sichere Programmierschnittstelle sISP (secure In System Programmer), 28, welche die Übergabe von Code an den Microcontroller 16 erlaubt, über die jedoch kein Auslesen der Speicherbausteine 24 und 26 möglich ist. Flash- und RAM-Speicher 24 und 26 sind im Microcontroller 16 angeordnet.

Die wesentlichen Bestandteile der Firmware 32 sind im Flash-Speicher 24 abgelegt. Sie bestehen aus einer Steuerung, welche auch eine kryptografische Einrichtung zum Ver- und Entschlüsseln umfasst, Initial-Code, einer Hauptanwendung, zu schützenden Funktionen und/oder weiteren Daten. Die Steuerung 27 kann als Bootloader realisiert sein, der ebenfalls im Flash-Speicher 24 des Microcontrollers abgelegt ist und über spezielle Kommandos aufgerufen werden kann. Wird das Programm des Microcontrollers 16 nun neu aufgesetzt oder aktualisiert, so hat die Steuerung 27 während des Programmiervorganges des Flash-Speichers 24 zunächst die Aufgabe, einen ersten kryptografischen Schlüssel aus den Folieneigenschaften abzuleiten. Hierfür werden die analogen Messwerte der Messschaltung 14 durch den im Microcontroller 16 befindlichen Analog-Digital-Wandler 30 gewandelt und anhand einer Vorschrift der kryptografische Schlüssel abgeleitet. Anschließend empfängt der Microcontroller 16 ein Programm und/oder Daten, beispielsweise die Hauptanwendung, über die sISP-Schnittstelle, verschlüsselt die empfangenen Daten und/oder das Programm ganz oder teilweise mit dem abgeleiteten ersten kryptografischen Schlüssel, um sie anschließend im Flash-Speicher 24 abzulegen.

Wird später das Programm durch den Microcontroller 16 ausgeführt, wird zuerst die Steuerung 27 in Form des Bootloaders aktiviert. Sie erzeugt sich zunächst erneut aus den aktuellen Eigenschaften des Trägers 12 mit Schaltungsstrukturen 13 respektive den von der Messschaltung 14 gemessenen und von dem Analog-Digital-Wandler 30 aufbereiteten komplexen Impedanzwerten einen zweiten kryptografischen Schlüssel. Mit diesem zweiten kryptografischen Schlüssel entschlüsselt der Microcontroller 16 die im Flash-Speicher 24 liegenden codierten Daten. Die decodierten Daten werden im RAM-Speicher 26 abgelegt und von dort verarbeitet.

Wurde nun zwischen dem Programmieren des Microcontrollers 16 und dem Ausführen des Programmes der Träger 12 mit Schaltungsstrukturen 13 manipuliert, beispielsweise abgelöst, verbogen, beschädigt oder zerstört, so haben sich die Impedanzwerte der Schaltungsstrukturen 13, welche sich auf dem Träger befinden, durch die Manipulation verändert.

Die veränderten Impedanzwerte führen dazu, dass die Steuerung 27 einen anderen, von dem während der Verschlüsselung erstellten ersten kryptografischen Schlüssel unterschiedlichen, zweiten kryptografischen Schlüssel erstellt. Mit diesem zweiten, auf veränderten Impedanzwerten beruhenden kryptografischen Schlüssel ist es dem Microcontroller 16 und der Steuerung 27 jedoch nicht möglich, die verschlüsselten Daten aus dem Flash-Speicher 24 korrekt zu entschlüsseln, da sich der erste und der zweite kryptografische Schlüssel unterscheiden, so dass der gesamte Aufbau nur bei unversehrter und nicht manipuliertem Träger 12 korrekt funktioniert. Damit kann das System 10 eine Manipulation an dem Träger 12 mit Schaltungsstrukturen 13 feststellen. Im Übrigen ist es egal, ob der Träger 12 im ausgeschalteten Zustand oder während des Betriebs des Microcontrollers 16 manipuliert wird, die Schlüsselinformation geht bei jeder Manipulation des Trägers 12 verloren.

Sind die verschlüsselten Daten durch eine Manipulation unbrauchbar, kann eine im Besitz des Codes im Klartext befindliche Person, bspw. der Hersteller des Gerätes, einen neuen Träger aufbringen und das Programm neu einspielen und so einen Betrieb des Systems wieder ermöglichen.

Die Firmware 32 kann zwar nach einer Ablösung des Trägers 12 ausgelesen werden, ist jedoch verschlüsselt, so dass der Code nicht im Klartext vorliegt. Die Steuerung 27 kann sowohl eine in Software umgesetzte Funktion, welche von einer Recheneinheit wie dem Microcontroller 16 ausgeführt wird, als auch eine dedizierte Hardware, wie beispielsweise einen FPGA oder AISIC, mit dort hinterlegter Steuerungsfunktion umfassen. Es können weitere Komponenten unter dem Träger mit Schaltungsstrukturen 12 angeordnet sein, abhängig davon, welche Komponenten von einem Manipulationsversuch geschützt werden sollen. Weiterhin ist es möglich, dass die Steuerung 27 eine eigenständige Komponente ist, die die Daten der Schaltungsstrukturen 13 des Trägers 12 drahtgebunden oder drahtlos, bspw. über ein RFID-Modul empfängt.

Fig. 1 zeigt die Umsetzung eines Kopier- und Manipulationsschutzes, welcher sich für eingebettete Systeme eignet. Die Messeinrichtung 14 ist ausgebildet, um die Impedanzen der Schaltungsstrukturen 13 zu einem Zeitpunkt zu messen oder die Schaltungsstrukturen 13 des Trägers 12 mit in Amplitude und/oder Frequenz variierenden Spannungsverläufen zu beaufschlagen und die Systemantwort der Schaltungsstrukturen 13 über einen Zeitverlauf zu empfangen. Für eine Beaufschlagung der Schaltungsstrukturen 13 mit variierenden Spannungsverläufen können die Schaltungsstrukturen 13 beispielsweise elektrische Signalleitungen bzw. -drähte umfassen, an welchen die Spannungsverläufe angelegt werden. Statt der Drähte kann prinzipiell auch eine andere Art von elektrisch auswertbarer Sensorik in der Folie verbaut sein. Anstelle einer Impedanzmessung zu einem Zeitpunkt können durch die Messung der Systemantwort über einen Zeitverlauf, wie es beispielsweise bei einem Challenge-Response-Verfahren geschieht, zusätzliche Freiheitsgrade bei der Erzeugung eines kryptografischen Schlüssels gewonnen werden. Änderungen an den angelegten Spannungsverläufen, wie beispielsweise in Amplitude oder Frequenz, bewirken unterschiedliche Systemantworten der Schaltungsstrukturen 13. Denkbar ist hier auch eine Konstruktion, bei welcher die angelegten Spannungsverläufe für die Systemanregung durch ein externes Gerät eingebracht werden. Das Auslesen eines Zustandes des Trägers 12 setzt in diesem Fall die Kenntnis des korrekten Anregungssignales voraus.

Um Manipulationen an der Folie möglichst präzise erkennen zu können, können die Schaltungsstrukturen 13 empfindlich gegenüber mechanischen Einflüssen, wie beispielsweise Biegung oder Dehnung und Änderungen der elektronischen Eigenschaften, wie beispielsweise Durchstechen der Schaltungsstrukturen 13 oder des Trägers 12 mit Messnadeln, entworfen werden.

Anstatt einer Entschlüsselung der gesamten Daten aus dem Flash-Speicher 24 während des Ausführens des Bootloaders können Teile der Daten auch erst im laufenden Betrieb decodiert werden. Wird die Schutzmembran im laufenden Betrieb des Gerätes entfernt oder manipuliert, so kann es passieren, dass sensible Daten wie Bestandteile bereits entschlüsselter Firmware 32 oder kryptografische Schlüssel noch temporär im RAM-Speicher 26 hinterlegt sind und ausgelesen oder manipuliert werden können. Um dieses Problem zu beseitigten, können die Impedanzmessungen in regelmäßigen, möglichst kurzen Abständen wiederholt werden. Bei Detektierung von großen Abweichungen reagiert die Vorrichtung mit einem Power-Reset des Microcontrollers 16 oder der Steuerung 27, um temporäre Daten aus dem RAM-Speicher 26 zu löschen.

Der Wert einer komplexen Impedanz weist einen Realteil und einen Imaginärteil auf und wird aus der Kombination eines resistiven Anteils und eines induktiven Anteils und/oder der Kombination eines resistiven Anteils und eines kapazitiven Anteils einer elektrischen Schaltung oder eines Abschnitts einer elektrischen Schaltung gebildet. Ein rein ohmscher Widerstand weist eine Impedanz mit einem Realteil ungleich Null und einem Imaginärteil gleich Null auf und stellt damit eine eindimensionale Größe dar. Schaltungsstrukturen mit einem induktiven oder kapazitiven Anteil weisen eine Impedanz mit einem Imaginärteil ungleich 0 auf, sodass anstelle der eindimensionalen Größe, dem ohmschen Widerstand, eine zweidimensionale Größe, die komplexwertige Impedanz, das Verhältnis von Spannung und Strom eines Teils einer elektrischen Schaltung oder der Schaltung angibt. Eine Messschaltung des vorherigen und der nachfolgenden Ausführungsbeispiele ist ausgebildet, die komplexwertige Impedanz von Schaltungsstrukturen zu messen und somit den Realteil und den Imaginärteil der Impedanz der Schaltungsstrukturen zu erfassen.

Bei Ausführungsbeispielen können Schaltungsstrukturen mäanderförmig innerhalb oder außerhalb des Trägers verlaufen. Durch Widerstandseffekte der Leitungslängen und ein zwischen den Mäanderabschnitten liegendes Dielektrikum, bspw. Luft oder das Material des Trägers, können kapazitive Effekte in den Schaltungsstrukturen entstehen, die zu einer messbaren komplexwertigen Impedanz der Schaltungsstrukturen führen können. Auch können zwischen einem Substrat, bspw. einer Leiterkarte respektive den daran angeordneten Leitern, und den Schaltungsstrukturen, die auf oder im Träger ausgebildet sind, Kapazitäten ausgebildet sein. Alternativ oder zusätzlich ist es denkbar, dass die Leiter der Schaltungsstrukturen stellenweise oder über ihre gesamte Ausdehnung derart ausgebildet sind, dass die komplexe Impedanz auch induktive Anteile aufweist, bspw. wenn Leiter der Schaltungsstrukturen anstelle eines Mäanders in Form einer Spule in oder am Träger angeordnet sind.

Weiterhin kann der Träger mit Schaltungsstrukturen als Abschirmung gegen Abhörangriffe auf Datenleitungen von außen dienen und bei entsprechender Auslegung auch ein geeignetes Antwortsignal auf eine gezielte physikalische Anregung geben. Dies ermöglicht die eindeutige Überprüfbarkeit der Originalität und Unversehrtheit der aufgebrachten Folie.

Ein großer Vorteil dieser Erfindung liegt in der Kombination aus einer sicheren Aufbewahrungsmöglichkeit für kryptografische Schlüssel bzw. eindeutigen Identifikationen sowie einem Auslese-, Manipulations- und Kopierschutz für die Firmware und das Gesamtsystem.

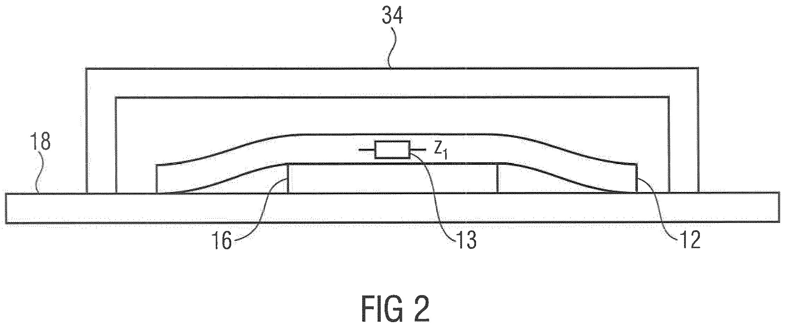

Fig. 2 zeigt eine schematische Querschnittansicht einer Vorrichtung mit einer Leiterkarte 18, auf der ein Microcontroller 16 angeordnet ist. Der Microcontroller 16 ist von dem Träger 12 mit Schaltungsstrukturen 13 bedeckt und ist analog zu Fig. 1 ausgebildet. Zusätzlich ist über dem Träger eine Schutzeinrichtung 34, angeordnet, um den Träger 12 und somit die gemessenen Impedanzwerte vor Beeinflussungen und/oder Veränderungen während des normalen Betriebes zu schützen. Die Schutzeinrichtung 34 kann eine wärmereflektierende oder opake Eigenschaft aufweisen, um das Material des Trägers 12 vor vorzeitiger Alterung zu schützen und derart steif ausgebildet sein, dass ein zufälliges Berühren der Schutzeinrichtung 34 nicht zu einer Verformung der Schaltungsstrukturen 13 und mithin veränderten Impedanzwerten führt, bspw. während einer Wartung eines Gerätes.

Die Schutzeinrichtung 34 kann in Form eines Gehäuses oder eines Deckels gebildet und mit einem Abstand zum Träger 12 angeordnet sein. Es ist jedoch auch vorstellbar, dass die Schutzeinrichtung 34 in Form einer Folie direkt an dem Träger 12 angeordnet ist. Hierbei kann die Folie derart steif ausgebildet sein, dass entweder leichte Berührungen zu keiner relevanten Veränderung der Impedanzwerte der Schaltungsstrukturen 13 führen, oder dass der Träger 12 lediglich vor Umwelteinflüssen wie Licht und Temperatur durch die die Schutzeinrichtung 34 geschützt wird, Berührungen jedoch zu einer Veränderung der Impedanzwerte der Schaltungsstrukturen 13 führen.

Bei Ausführungsbeispielen kann der Träger in Form einer Folie ausgebildet und über einen Bereich mit mehreren schützenswerten Komponenten so angebracht sein, dass ein Zugriff auf eine oder mehrere der zu schützenden Komponenten von außen ohne eine Verformung des Trägers verhindert ist. Der Träger mit Schaltungsstrukturen kann aus unterschiedlichen Materialien bestehen. Unter anderem kann er flexibel ausgebildet sein, so dass er auf unebenen Oberflächen oder in der Höhe variierenden Komponenten angebracht werden kann.

Die beschriebene Art der Verschlüsselung von Daten birgt den Vorteil, dass der kryptografische Schlüssel selbst nicht im System hinterlegt oder gespeichert ist, bzw. sein muss. Er wird aus dem Zustand des Trägers 12 respektive aus den Impedanzen der Schaltungsstrukturen 13 abgeleitet und kann folglich nicht korrumpiert oder ausgelesen werden.

Nachdem in den vorangegangenen Erläuterungen ein Ausführungsbeispiel mit einem Microcontroller 16 und darin integrierten Speicherbausteinen 24 und 26 dargestellt wurde, zeigen nachfolgende Ausführungsbeispiele einen Microcontroller 16 mit einem externen Flash-Speicher 24, an welchem durch eine elektronischen Membran in Form eines Trägers 12 mit Schaltungsstrukturen 13 ein unberechtigter Zugriff verhindert wird.

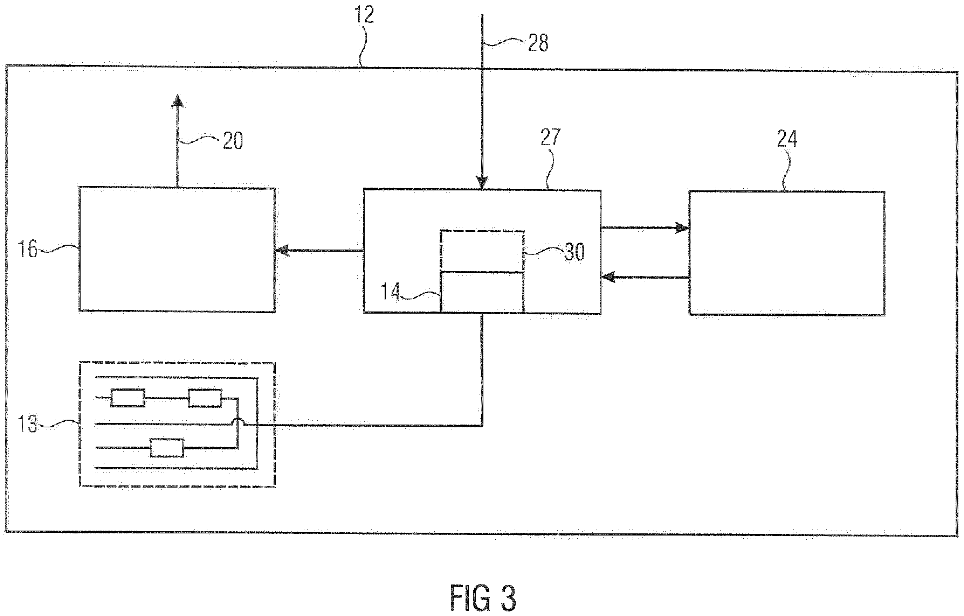

Fig. 3 zeigt ein Ausführungsbeispiel mit einem externen Flash-Speicher 24. Der Träger 12 bedeckt den Microcontroller 16, die von ihm umfasste JTAG-Schnittstelle 20 sowie die Steuerung 27 und einen beabstandet vom Microcontroller 16 und der Steuerung 27 angeordneten Flash-Speicher 24. Die Messschaltung 14 und der Analog-Digital-Wandler 30 sind als Teil der Steuerung 27 realisiert. Die Messschaltung 14 ist ein Teil des Moduls der Steuerung 27 und stellt die Messergebnisse dem als Teil der Steuerungssoftware umgesetzten Analog-Digital-Wandler 30 zur Verfügung. Die gesamte Vorrichtung kommuniziert lediglich über die sichere Programmierschnittstelle 28 mit anderen Vorrichtungen. Alle anderen sicherheitskritischen Kommunikationsschnittstellen und -leitungen, wie bspw. zwischen dem Flash-Speicher 24 und der Steuerung 27, sind von dem Träger 12 bedeckt und von außen unzugänglich.

Die Schaltungsstrukturen 13 können neben den Impedanzen weitere Signalleitungen aufweisen, die von der Steuerung 27 mit in Amplitude oder Frequenz variierenden Signalen beaufschlagt werden können, um so ein Challenge-Response-Verfahren durchführen zu können und, wie oben ausgeführt, den Ergebnisraum der Messschaltung 14 zu erweitern.

Der Flash-Speicher 24 enthält vom Microcontroller 16 zu verarbeitende Daten und kommuniziert mit diesem indirekt über die Steuerung 27. Über die sichere Programmierschnittstelle 28 ist die Steuerung 27 in der Lage, Daten und Programme für den Flash-Speicher 24 oder den Microcontroller 16 zu empfangen. Ein Auslesen des Flash-Speichers 24 oder der auf dem Microcontroller 16 befindlichen Daten oder Programme über die Schnittstelle 28 ist jedoch verhindert. Werden von der Steuerung 27 Daten über die sichere Programmierschnittstelle 28 empfangen, so verschlüsselt die Steuerung 27 diese mit einem ersten kryptografischen Schlüssel, welchen sie aus den von der Messschaltung 14 bereitgestellten Impedanzwerten der Schaltungsstrukturen 13 ableitet und legt sie im verschlüsselten Zustand im Flash-Speicher 24 ab. Werden vom Microcontroller 16 Daten aus dem Flash-Speicher 24 benötigt, so erzeugt die Steuerung 27 einen zweiten kryptografischen Schlüssel aus den Eigenschaften der Schaltungsstrukturen 13, decodiert damit die benötigten Daten aus dem Flash-Speicher 24 und leitet sie an den Microcontroller 16 weiter, wobei sowohl die Datenleitungen vom Flash-Speicher 24 zur Steuerung 27 als auch von der Steuerung 27 zum Microcontroller 16 von dem Träger 12 bedeckt und vor einem unberechtigten Zugriff geschützt sind. Wird der Träger 12 respektive die Schaltungsstrukturen 13 manipuliert, so ändern sich die von der Messschaltung 14 bereitgestellten Messwerte, mithin der zweite kryptografische Schlüssel, der sich dann von dem ersten kryptografischen Schlüssel unterscheidet, was eine korrekte Decodierung der Daten aus dem Flash-Speicher 24 verhindert. Der zweite kryptografische Schlüssel wird dabei im Augenblick der Manipulation verändert, unabhängig von einem eingeschalteten oder ausgeschalteten Zustand der Vorrichtung. Zwar kann nach einer Manipulation der verschlüsselte Code aus dem Flash-Speicher 24 ausgelesen werden, da durch die erfolgte Manipulation jedoch die Schlüsselinformation der Schaltungsstrukturen 13 zerstört wurde, liegen die Daten nicht im Klartext vor.

Die in Fig. 3 gezeigte Anordnung eines bezüglich des Microcontrollers 16 externen Speichers bietet eine Reihe von Vorteilen. So kann der interne Speicher einer schützenswerten Komponente auf einfache Art und Weise erweitert werden, was insbesondere aus Kostengründen attraktiv ist. Der zusätzliche, externe Speicher ist durch den Träger 12 jedoch in gleichem Maße vor einem unberechtigtem Zugriff geschützt, wie der Microcontroller 16, ohne dass der externe Flash-Speicher 24 selbst einer besonderen Sicherheitsklasse genügen muss.

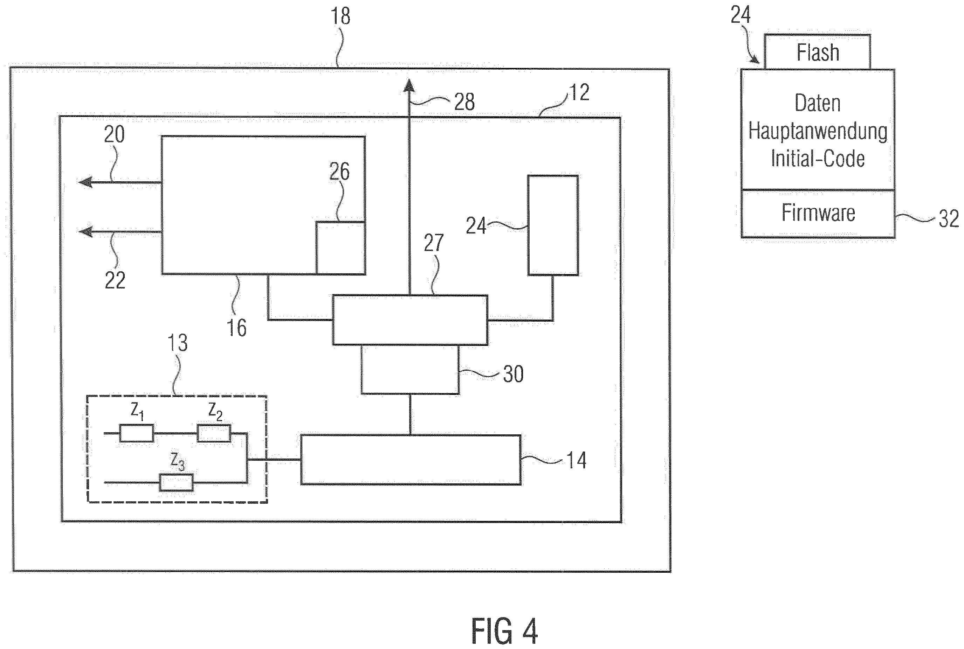

Fig. 4 zeigt eine, schematische Darstellung einer Schaltung, die auf einer Leiterkarte 18 angebracht ist und einen Microcontroller 16 mit integriertem RAM-Speicher, eine Steuereinheit 27 mit Analog-Digital-Wandler 30, der von der Messschaltung 14 bereitgestellte Messwerte verarbeitet, einen separaten Flash-Speicher 24, auf welchen durch die Steuerung 27 zugegriffen wird, und eine sichere Programmierschnittstelle 28 aufweist. Der Microcontroller 16 ist als Microcontroller ohne gesonderte Schutzfunktionen dargestellt und verfügt über eine JTAG-Schnittstelle 20 und eine ISP-Schnittstelle 22. Alle Bestandteile der Schaltung, mit Ausnahme der sicheren Programmierschnittstelle sISP 28 sind von dem Träger 12 mit Schaltungsstrukturen 13 bedeckt. Der Flash-Speicher 24 enthält sämtliche Daten und/oder Programmsequenzen in verschlüsseltem Zustand. Die Steuerung 27 kann beispielsweise durch ein FPGA (Field Programmable Gate Array) oder einen ASIC (Application Specific Integrated Circuit) realisiert sein.

Eine über die sichere Programmierschnittstelle 28 empfangene Firmware und/oder andere schützenswerte Daten verschlüsselt die Steuerung 27 mit einem ersten kryptografischen Schlüssel, welchen sie aus den von der Messschaltung 14 bereitgestellten Impedanzwerten der Schaltungsstrukturen 13 ableitet. Zur Laufzeit werden vom Microcontroller 16 benötigte Daten und/oder Code-Sequenzen durch die Steuerung 27 vom Flash-Speicher 24 ausgelesen und mit einem zweiten kryptografischen Schlüssel entschlüsselt. Die decodierten Daten und/oder Code-Sequenzen stellt die Steuerung 27 dem Microcontroller 16 zur Verfügung. Die Datenleitungen von dem Flash-Speicher 24 zur Steuerung 27 und von der Steuerung 27 zum Microcontroller 16 sind von dem Träger 12 mit den Schaltungsstrukturen 13 bedeckt, so dass die von der Steuerung 27 zum Microcontroller 16 im Klartext übertragenen Daten vor einem Zugriff geschützt sind, bis eine Manipulation des Trägers stattfindet. Im Falle einer Manipulation verändern sich die Impedanzwerte der Schaltungsstrukturen 13, was eine Decodierung und einen Abgriff entschlüsselter Daten verhindert. Zur Laufzeit erfolgt die Datenübertragung vom Flash-Speicher 24 zum Microcontroller 16 immer über die Steuerung 27. Durch die Weitergabe der Daten im Klartext erscheint die Steuerung 27 für den Microcontroller 16 transparent. Ein Vorteil dieser Ausführungsform ist, dass sich im RAM-Speicher 26 des Microcontrollers zu einem Zeitpunkt lediglich die zur aktuellen Laufzeit vom Microcontroller 16 verwendeten Teile unverschlüsselten Codes und/oder unverschlüsselter Daten befinden. Diese lassen sich bei detektierter Manipulation gegebenenfalls durch eine dedizierte Aktion des Microcontrollers, bspw. ein Power-Reset oder ein Neustart, löschen.

Dieses Ausführungsbeispiel weist gegenüber der vorangegangenen Ausführungsform eine größere Sicherheitsstufe auf, da im Flash-Speicher 24 abgelegte Daten vollständig verschlüsselt sein können. Alternativ können auch nur Teile der Daten verschlüsselt werden.

Die eigentliche Funktionalität und Intelligenz eines eingebetteten Systems befindet sich oft in der Firmware 32. Um Missbrauch zu vermeiden und die Firmware 32 gegen Manipulationen und das Auslesen aus dem Speicher 24 bzw. 26 zu schützen, wird eine Absicherung des Speichers 24 bzw. 26 gegen ein Auslesen der Firmware 32 angestrebt. Hierbei können zwei Systeme mit unterschiedlichem Sicherheitslevel realisiert werden, wie es Fig. 1 und Fig. 4 zeigen. Das Ausführungsbeispiel in Fig. 4 besitzt dabei das höhere Sicherheitslevel der beiden Ausführungsbeispiele. Das System besteht aus einem Microcontroller 16 mit internem RAM-Speicher 26 und externem Flash-Speicher 24. Diese Variante ist ressourcenintensiver, da sämtliche Daten verschlüsselt sind, in Fig. 1 wird aufgrund von Performance- und Ressourcen-Optimierung nur ein Teil der Firmware 32 im RAM-Speicher 26 entschlüsselt gehalten, da nur Code in dem Umfang des RAM-Speichers 26 am Stück entschlüsselt werden kann. Ist das Programm im RAM-Speicher 26 abgearbeitet und wird ein weiterer Programmblock von dem Mikrocontroller 16 benötigt, so muss der Programmteil im RAM 26 verworfen werden, um den neuen entschlüsseln zu können.

Obwohl in vorangegangenen und nachfolgenden Ausführungsbeispielen vom Mikrocontroller genutzter temporärer Speicher stets als RAM-Speicher beschrieben wurde und wird, kann ein solcher temporärer Speicher auch in Form von Registern oder anderen temporären Speichern umgesetzt sein.

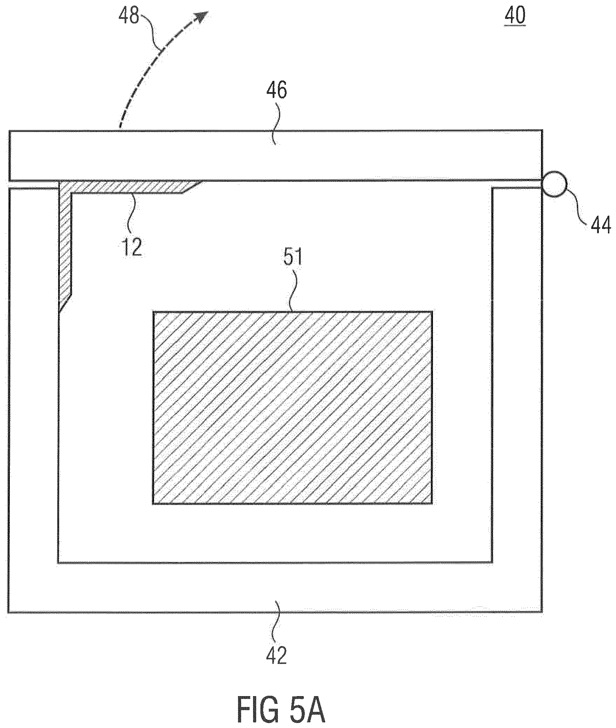

Fig. 5a zeigt die schematische Darstellung einer Vorrichtung 40 mit einem elektronischen Siegelsystem. An einem Gehäusekörper 42 ist über ein Scharnier 44 ein Gehäusedeckel 46 angeordnet, so dass der Gehäusedeckel in Richtung 48 zu öffnen ist. Um eine Öffnung des Gehäusedeckels 46 zu registrieren, ist auf der Innenseite des Gehäuses zwischen dem Gehäusekörper 42 und dem beweglich dazu angeordneten Gehäusedeckel 46 ein Träger 12 mit Schaltungsstrukturen 13 angeordnet. Wird nun der Deckel 46 in Richtung 48 bewegt, führt der entstehende Spalt zwischen dem Gehäusekörper 42 und dem Gehäusedeckel 46 zu einer Verformung des Trägers 12 und mithin zu einer Veränderung der Impedanzwerte der Schaltungsstrukturen 13. Eine solche Vorrichtung kann beispielsweise dazu verwendet werden festzustellen, ob ein Gehäuse 42/46 zwischen einem ersten Zeitpunkt, beispielsweise eine Auslieferung, und einem zweiten Zeitpunkt, beispielsweise eine Zustellung oder Wartung, geöffnet und somit das Siegel gebrochen wurde. Wenn zum ersten Zeitpunkt die Impedanzwerte der Schaltungsstrukturen 13 auf dem Träger 12 ausgelesen werden und in einer Art Schlüssel hinterlegt werden, so kann dieser Wert mit den zu einem zweiten Zeitpunkt ausgelesenen Impedanzwerten verglichen werden.

Auch ist es denkbar, dass eine im Inneren des Gehäuses angeordnete Gerätschaft oder Schaltung 51, eine Aktion davon abhängig macht, ob sich die gemessenen Impedanzwerte der Schaltungsstrukturen 13 ändern. Beispielsweise können Spannung führende Teile im Inneren des Gehäuses 42/46 spannungsfrei geschaltet werden. Auch ist denkbar, dass ein Öffnen des Gehäuses 42/46 zum Löschen sensibler Daten führt, oder dass dieses Ereignis in einem Speicher einer Komponente im Inneren des Gehäuses 42/46 festgehalten wird.

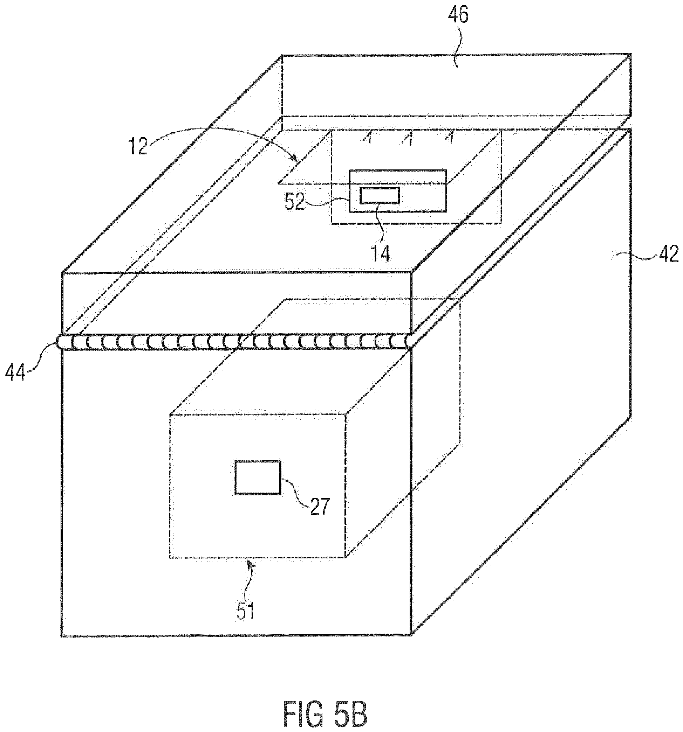

Fig. 5b zeigt eine schematische Innenansicht der Vorrichtung 40 mit einem Träger 12 mit Schaltungsstrukturen 13, der ein RFID-Tag 52 umfasst, welches die Messschaltung 14 beinhaltet und in der Lage ist, mit einer in dem Gehäusekörper 42 befindlichen Gerätschaft 51 und/oder einem anders gearteten elektronischen System zu kommunizieren und ihr die gemessenen Impedanzen der Schaltungsstrukturen 13 des Trägers 12 mitzuteilen. Die Gerätschaft 51 umfasst die Steuerung 27 zur Bewertung der Impedanzwerte. Sofern die Gerätschaft 51 einen Netzzugang besitzt, kann sie im Falle eines Siegelbruches andere Netzteilnehmer oder möglicherweise eine administrative Einheit von dem detektierten Siegelbruch unterrichten. Dies kann derart geschehen, dass das durch den Gehäusegrundkörper 42, das Scharnier 44 und den Gehäusedeckel 46 geformte Gehäuse beispielhaft ein Schiffscontainer ist, und die elektronische Gerätschaft 51 den Absender und/oder den Empfänger des Containers benachrichtigt, wenn der Container unberechtigt geöffnet worden ist. Ein weiteres mögliches Anwendungsgebiet stellen beispielsweise neuartige Stromzähler oder Smartmeter dar, die dem Stromnetzbetreiber über einen Fernzugriff eine Zustandskontrolle der Versiegelungsplombe in Form des Trägers 12 ermöglichen. Eine Manipulation am Träger 12 kann sowohl lokal als auch aus der Ferne detektiert werden.

Prinzipiell ist es denkbar, dass eine Kommunikation einer Gerätschaft 51 über jedwede Art von Kommunikationskanälen stattfindet. Dies kann beispielsweise ein Netzwerkanschluss, eine Funk- und/oder sonstige Drahtlosverbindung sein Über eine Kommunikationseinrichtung kann eine Manipulation oder ein Siegelbruch durch andere Kommunikationspartner abgefragt oder ihnen unabhängig von einer externen Abfrage mitgeteilt werden, was einen Zeitgewinn bedeuten kann.

Obwohl die Kommunikation zwischen dem RFID-Tag 52 und der Gerätschaft 51 und/oder einem anders gearteten elektronischen System als drahtloser Kommunikationsweg dargestellt wurde, kann die Kommunikation prinzipiell auch drahtgebunden umgesetzt sein.

Zudem ermöglicht diese Erfindung eine Absicherung des in einer Firmware 32 befindlichen Know-how durch gezielte Reaktionen auf einen Siegelbruch, welche sich nicht nur auf visuelle und lokale Detektionen beschränken, sondern auch aktiv gegenlenken können. Zudem können Siegelverletzungen auch aufgezeichnet werden, um eine spätere Datierung des Ereignisses oder der Ereignisse zu ermöglichen.

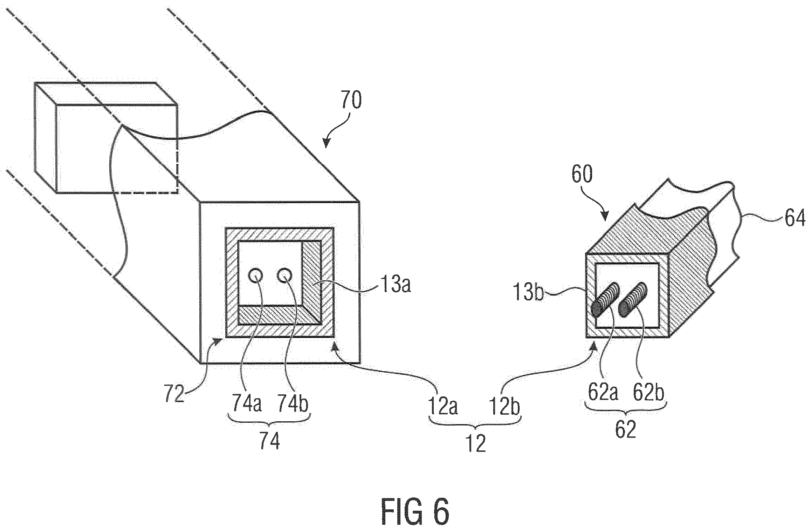

Fig. 6 zeigt ein System 70 und die Verwendung des Trägers 12 mit Schaltungsstrukturen 13 als elektronische Kontaktdetektion. Hierfür wird eine Steckerbuchse 72 mit dem Träger 12a und den Schaltungsstrukturen 13a beschichtet, deren Impedanzwerte von einer Auswerteelektronik 14 im Inneren des Systems 70 gemessen werden. Wird daraufhin ein Stecker 64 mit seinen Steckerkontakten 62 in das Buchsengehäuse 72 mit den Buchsenkontakten 74 eingeführt, so ändern sich die elektronischen Eigenschaften der Schaltungsstrukturen 13a, welche sich auf dem Träger 12a befinden, durch den mechanischen Kontakt, was möglicherweise zu leichten Kratzspuren führt. Eine autorisierte Person kann daraufhin das Gesamtsystem 70 auf den aktuellen Zustand der Schaltungsstrukturen 13a auf dem Träger 12a kalibrieren und das Gesamtsystem 70 damit aktivieren. Ein Entfernen und Wiedereinführen des Steckers 64 verursacht durch eine erneute mechanische Beanspruchung des Trägers 12a eine erneute Änderung der gemessenen Impedanzwerte. Einer nicht autorisierten Person ist die Kalibrierung nicht möglich, da sie die erforderlichen Daten nicht im Klartext besitzt. Alternativ oder ergänzend kann sich ein Träger 12b am Stecker 64 und/oder an den Steckerkontakten 62 befinden, was eine Bestimmung erlaubt, ob der Stecker zwischen einem ersten und einem zweiten Zeitpunkt in ein unautorisiertes System eingeführt wurde.

Das Trägermaterial kann als Folie oder Membran ausgeführt sein oder in anderer Form realisiert werden. Die Anordnung des Trägers 12 kann im Fall einer Steckerbuchse 72 und/oder eines Steckerkontaktes 62 auch eine Ausführung des Trägers als Volumenkörper umfassen, bei der der Stecker 64 oder die Steckerbuchse 72 ganz oder teilweise aus dem Trägermaterial gebildet sind. Insbesondere in Form einer Folie oder einer Membran kann ein Träger 12 jedoch auch nach erfolgter Herstellung einer Komponente zu einem beliebigen Zeitpunkt nachträglich in ein System integriert werden.

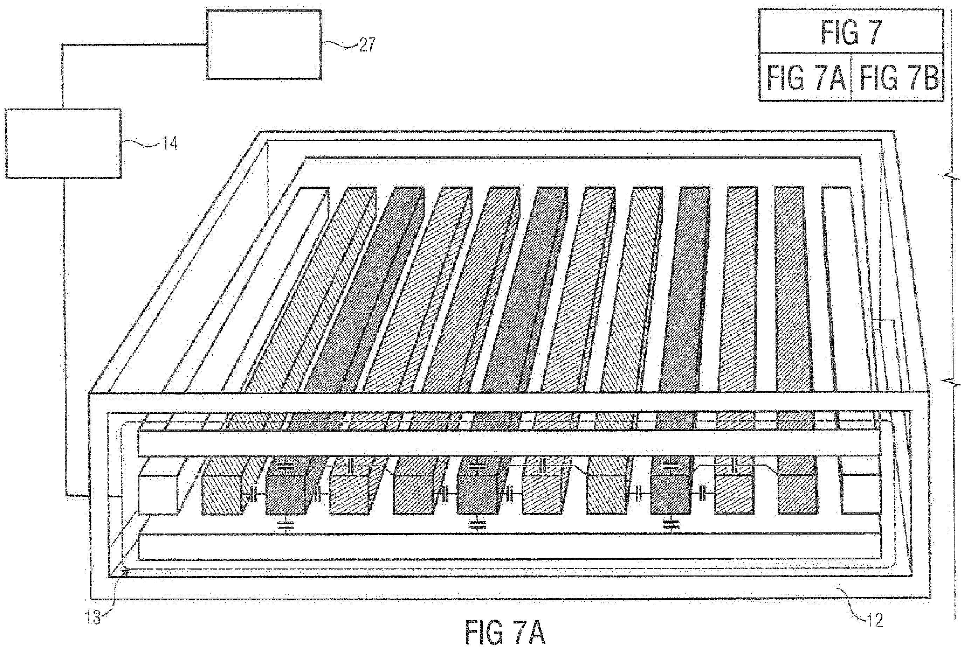

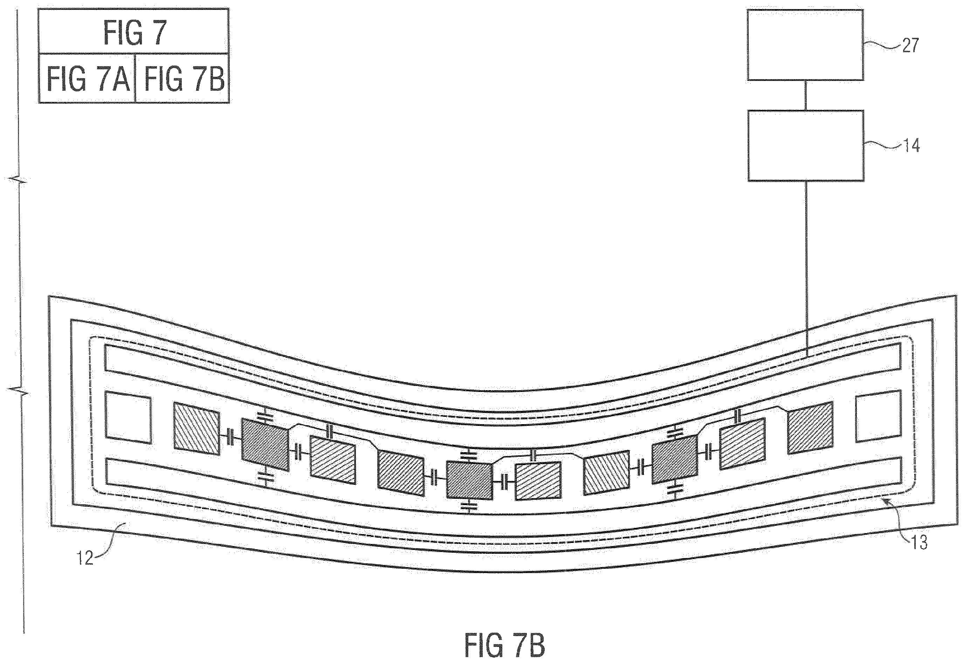

Fig. 7a und 7b zeigen je eine Darstellung eines Trägers 12 mit Schaltungsstrukturen 13, bei denen die Schaltungsstrukturen 13 in das Material des Trägers 12 eingebettet und deren Impedanzwerte über die Messschaltung 14 der Steuerung 27 zur Verfügung gestellt werden. Ändert sich durch Verformung die Anordnung der Leiterbahnen der Schaltungsstruktur 13 zueinander, wie in Fig. 7b dargestellt, so verändern sich auch die Impedanzwerte, die zwischen den einzelnen Leiterbahnen durch die Messschaltung 14 erfasst werden.

Eine Einbettung der Schaltungsstrukturen 13 in das Material des Trägers 12 kann vorteilhaft sein, um versehentliche Beschädigungen an den Leiterbahnen, beispielsweise durch Berührungen während der Montage zu vermeiden. Alternativ zu Fig. 7 können die Schaltungsstrukturen 13 auch an dem Träger 12 angeordnet sein.

Obwohl in Fig. 1 dargestellt wurde, dass im Falle einer Manipulation des Trägers 12 die in den Speicherbausteinen 24 und 26 abgelegten Daten unbrauchbar werden, da kein zur Entschlüsselung geeigneter kryptografischer Schlüssel mehr erzeugt werden kann, ist es auch denkbar, dass eine bemerkte Manipulation an dem Träger 12 andere und/oder weitere Aktionen auslöst, wie beispielsweise einen Neustart oder ein Power-Reset des Microcontrollers 16, um so auch die RAM-Speicher 26, in welchen sich unverschlüsselte Daten befinden können, zu löschen. Auch weitere Aktionen sind denkbar, wie beispielsweise ein Neustart der schützenswerten Komponente in einem abgesicherten Modus, in dem keine entschlüsselten Programmsequenzen oder Daten benötigt werden, um so zumindest rudimentäre oder möglicherweise sicherheitsrelevante Funktionen eines Gesamtsystems aufrechtzuerhalten.

Obwohl der Mikrocontroller in vorangegangenen Ausführungsbeispielen lediglich mit JTAG- oder ISP-Schnittstellen beschrieben wurde, kann der Mikrocontroller auch andere Schnittstellen zum Programmieren oder Auslesen von Speicherbausteinen umfassen, die von einem Träger mit Schaltungsstrukturen geschützt werden können.

Obwohl in vorangegangenen Ausführungsbeispielen lediglich eine sichere Programmierschnittstelle für die Programmierung der Speicherbausteine als ohne eine Manipulation des Trägers zugänglich beschrieben wurde, können auch weitere Kommunikationsschnittstellen ohne eine Manipulation des Träger genutzt werden. Diese weiteren Schnittstellen erlauben jedoch keinen Zugriff auf Anwendungsdaten, sodass ein Auslesen schützenswerter Daten auch in diesem Fall verhindert ist.

In manchen Anwendungsfällen kann es von Vorteil sein, die Schaltungsstrukturen, die sich auf dem Träger befinden, differenziell aufzubauen, um so möglicherweise eine größere Unabhängigkeit der Ergebnisse der Impedanzmessungen von Temperaturschwankungen zu erhalten. Ebenfalls ist es denkbar, dass die Schaltungsstrukturen, welche sich in oder auf dem Träger befinden, in Form gedruckter Elektroden ausgeführt sind. Aufgrund der schwer zu reproduzierenden Oberflächeneigenschaften des Trägermaterials und den im Druckvorgang leicht verlaufenden Rändern der Elektroden und den damit einhergehenden unterschiedlichen Impedanzwerte der Schaltungsstrukturen kann diese Methode zu einer weiteren Diversifizierung der kryptografischen Schlüssel führen.

Um die Diversifizierung der möglichen kryptografischen Schlüssel weiter zu vergrößern, ist es auch vorstellbar, dass in das Trägermaterial, aus dem der Träger besteht, leitendes und nicht-leitendes Granulat eingebracht ist. Die zufällig verteilten unterschiedlichen Leitfähigkeiten führen zu variierenden Permittivitätszahlen über den Bereich des Trägers und gegebenenfalls zu lokalen Kurzschlüssen von Teilen der Schaltungsstrukturen. Beide Effekte führen dazu, dass identische Schaltungsstrukturen von einander verschiedene Impedanzwerte aufweisen.

Anders ausgedrückt können Ausführungsbeispiele des beschriebenen Schutzsystems folgende primäre Komponenten umfassen, die zur Realisierung des Schutzmechanismus dienen können: Eine erste primäre Komponente, einen Träger, welcher als Schutzfolie ausgeführt sein kann, mit Schaltungsstrukturen und darin integrierten Impedanzen.

Die Schutzfolie kann aufgebrachte bzw. integrierte Schaltungsstrukturen mit komplexen Impedanzen aufweisen. Der Träger besteht idealerweise aus einem flexiblen Kunststoff, welcher sich an die Form der zu schützenden Bauelemente anpassen lässt.

Die Impedanzen lassen sich durch geeignete Kombination aus leitenden, halbleitenden oder isolierenden Bauelementen realisieren. Beim Einsatz der Schutzvorrichtung in einer störungsbehafteten Umgebung können die Elektroden mit einer Schutzschirmung versehen werden, um die Reproduzierbarkeit der Messwerte zu erhöhen.

Für die Herstellung der Träger mit Schaltungsstrukturen bieten sich die Techniken der druckbaren Elektronik an. Diese besitzen durch die kaum reproduzierbaren Oberflächeneigenschaften des Trägermaterials und die damit verbundene zufällige Verteilung der elektronischen Tinte beim Drucken oder den darauffolgenden Nachbehandlungsschritten große Herstellungstoleranzen, welche die Einzigartigkeit jedes Trägers mit Schaltungsstrukturen Vorrichtung verstärken. Durch die Verwendung von Rolle-zu-Rolle Druckprozessen können zudem die Herstellungskosten im Vergleich zu CMOS-Prozessen, wie sie für PUFs benötigt werden, drastisch reduziert werden.

Eine zweite primäre Komponente, die Messschaltung, ist so realisiert, dass sie die Impedanzen der zu messenden Schaltungsstrukturen erfassen kann. Die Impedanz ergibt sich aus dem Widerstand, der Kapazität und der Induktivität der Schaltung.

Eine dritte primäre Komponente, die Messdatenaufbereitung, beispielsweise in Form eines Analog-Digital-Wandlers, dient zum einen der Digitalisierung der Messwerte und zum anderen deren Stabilisierung durch Unterdrückung von Umgebungsrauschen und anderen ungewollten Störsignalen. Die Messautbereitung kann mittels eines Microcontrollers mit Analog-Digital-Wandler und mittels eines Entstör-Algorithmus in Software realisiert werden. Gibt es höhere Performance- und Sicherheitsansprüche, so kann die Messdatenaufbereitung auch in einem FPGA oder ASIC realisiert werden. Die primären Komponenten Schlüsselerzeugung und Datenverschlüsselung können dann zusammen mit der Messdatenaufbereitung in diesem Baustein integriert werden.

Eine vierte primäre Komponente, die Schlüsselerzeugung, nutzt die Auswertung der kapazitiven Eigenschaften des Trägers. Bei der Verwendung von Impedanzmessungen werden die Schaltungsstrukturen durch die Signalgeneratorschaltung angeregt und die erfassten und aufbereiteten Messdaten mittels eines speziellen Algorithmus ausgewertet. Dieser Mechanismus agiert hierbei wie ein "Challenge-Response-Verfahren": die Anregung durch die Signalgeneratorschaltung wird als Challenge zu den Schaltungsstrukturen gesendet, welche je nach Eingangssignal- und Membraneigenschaften mit einer entsprechenden Systemantwort, Response, reagiert. Zur Erzeugung eines korrekten kryptografischen Schlüssels zu einem zweiten Zeitpunkt muss in diesem Fall nicht nur der Zustand des Trägers unverändert, sondern auch der einzuspielende Signalverlauf bekannt sein.

Wie die Messdatenaufbereitung kann auch die Schlüsselerzeugung aus Kostengründen in Software oder aus Performancegründen in Hardware - FPGA oder ASIC - realisiert werden.

Eine fünfte primäre Komponente, die Datenverschlüsselung, dient dazu, die Firmware, die in den Microcontroller eingespielt wird, komplett oder partiell zu verschlüsseln und ist Teil der Steuerung, welche die Datenweitergabe an Prozessoren und Speicher durchführt.

Eine sechste primäre Komponente, die Datenentschlüsselung bezeichnet die Einheit, in der die verschlüsselten Daten zum Ausführen der Anwendung wieder entschlüsselt werden und kann als ein Teil der Steuerung umgesetzt sein.

Eine siebte primäre Komponente, die Kommunikationsschnittstelle, bietet die Möglichkeit, den Status des Trägers - intakt oder beschädigt - von extern abzufragen, sofern das zu schützende Gerät in einem Netzwerk betrieben wird. Bei Manipulationen am Träger kann infolge einer falschen Schlüsselextraktion das schützenswerte Programm nicht korrekt entschlüsselt werden. Es wird daraufhin nur eine Not-Anwendung gestartet, welche die anderen Teilnehmer im Netzwerk über die manipulierte Hardware informiert.

Möchte ein Angreifer an die Firmware des geschützten Systems gelangen, so muss er zunächst Zugriff zu den unter dem Träger befindlichen Schnittstellen bekommen. Versucht der Angreifer nun den Träger zu entfernen oder zu umgehen, so ändert er damit automatisch die geometrischen und somit gleichzeitig die elektrischen Beschaffenheiten der im oder am Träger befindlichen Schaltungsstrukturen und zerstört den ursprünglichen kryptografischen Schlüssel bzw. die Identifikation.

Nach dem Entfernen oder Manipulieren der Membran kann die Firmware zwar ausgelesen werden, sie liegt allerdings verschlüsselt bzw. partiell verschlüsselt im Flash-Speicher und ist somit unbrauchbar für den Angreifer.

Verwendungsmöglichkeiten für diese Erfindung finden sich in allen elektronischen Geräten, in denen schützenswertes Firmen-Know-how in einem Speicher abgelegt werden muss. Die Spanne reicht daher von Unterhaltungselektronik und Mobilfunk über Medizintechnik und elektrisch geregelten Industrieanlagen bis hin zu Steuergeräten im Fahrzeug. All diese Produkte können ohne ausreichend integrierte Schutzmechanismen, wie die hier vorgestellte Erfindung nachgebaut, imitiert oder manipuliert werden.

Des Weiteren findet die Erfindung als Siegelnutzung Anwendung im Produkt-Tracking oder der Manipulationsdetektion.

Elementare Verwendungsmöglichkeiten der Erfindung sind im Nachfolgenden stichpunktartig aufgelistet:
- Manipulationserkennung,
- Kopierschutz,
- eindeutige Identifizierung,
- Individualisierung und Personalisierung,
- Speicherung bzw. Erzeugung kryptografischer Schlüssel für symmetrische und asymmetrische Verschlüsselungsverfahren,
- Öffnen von Gehäusen verhindern,
- Entfernen von Systemteilen, beispielsweise Steckverbindungen, verhindern.

Die Erfindung bietet die Grundlage für eine Basistechnologie zur Erstellung einer sicheren verteilten Produktionsumgebung, da nicht nur Komponenten sondern auch Datenleitungen und -speicher vor Manipulation und unberechtigtem Zugriff geschützt werden können. Durch den Manipulationsschutz wird eine sichere Vernetzung ermöglicht, da bereits die Informationsverarbeitung und -speicherung in der Anlagenkomponente abgesichert ist.

### Literatur:

[1] US 6,512,454 B2
[2] Bartol Filipovic, Oliver Schimmel: Schutz eingebetteter Systeme vor Produktpiraterie - Technologischer Hintergrund und Vorbeugemaßnahmen / Fraunhofer AISEC, 11 2011 - Forschungsbericht. http://www.aisec.fraunhofer.de/content/aisec/de/pdf/studien/2011-11-15Produktschutz-Studie.pdf 1,2
[3] US 6,929,900 B2
[4] US 5,858,500
[5] Maes, Roel: Physically Unclonable Functions: Constructions, Properties and Applications, Katholieke Universiteit Leuven - Faculty of Engineering, Dissertation, 08 2012. http://www.cosic.esat.kuleuven.be/publications/thesis-211.pdf
[6] R. Torrance, D. James: The State-of-the-Art in IC Reverse Engineering. In: Clavier, Christophe (hrsg.); Gaj, Kris (hrsg.): Cryptographic Hardware and Embedded Systems CHES 2009: 11th International Workshop Lausanne, Switzerland, September 6-9, 2009, Proceedings, Berlin, Heidelberg: Springer-Verlag 2009(Lecture Notes in Computer Science 5747) S. 363-381, Invited Talk 3
[7] Tarnovsky, C.: Deconstructing a secure processor. In: Black Hat DC 2010 (2010)
[8] Weco: Vergusstechnik.
   http://download.wecogroup.com/themen/de/weco_vergusstechnik.pdf
[9] US 6,957,345 B2
[10] US 6,047,068

## Patentansprüche

1. Vorrichtung mit folgenden Merkmalen:
einem Träger (12) mit Schaltungsstrukturen (13), die eine komplexe Impedanz aufweisen;
einer Messeinrichtung (14), die ausgebildet ist, um die komplexe Impedanz der Schaltungsstrukturen (13) zu einem ersten Zeitpunkt zu messen, um ein erstes Ergebnis zu erhalten, und zu einem späteren, zweiten Zeitpunkt zu messen, um ein zweites Ergebnis zu erhalten;
einer Steuerung (27), die ausgelegt ist, um abhängig davon, ob das erste Ergebnis mit dem zweiten Ergebnis übereinstimmt, einen Betrieb einer Komponente zu ermöglichen oder zu beurteilen, ob ein unberechtigter Zugriff auf die Komponente stattgefunden hat;
wobei die Steuerung (27) ausgelegt ist, um aus dem zweiten Ergebnis einen kryptografischen Schlüssel abzuleiten; und
wobei die Steuerung (27) ferner eine kryptografische Einrichtung aufweist, die dazu ausgebildet ist, um ein auf der Komponente gespeichertes verschlüsseltes Programm abschnittsweise oder vollständig mit dem kryptografischen Schlüssel zu entschlüsseln;
bei der die von der Messeinrichtung (14) erfasste komplexe Impedanz eine zweidimensionale Größe mit einem von null verschiedenen Imaginärteil und einem von null verschiedenen Realteil ist, wobei die Messeinrichtung (14) ausgebildet ist, um den Realteil und den Imaginärteil der komplexen Impedanz der Schaltungsstrukturen (13) zu erfassen.

2. Vorrichtung gemäß Anspruch 1, bei der der kryptografische Schlüssel ein zweiter kryptografischer Schlüssel ist, und bei der die Steuerung (27) ausgelegt ist, um aus dem ersten Ergebnis einen ersten kryptografischen Schlüssel abzuleiten;
wobei die kryptografische Einrichtung dazu ausgebildet ist, den ersten kryptografischen Schlüssel zu verwenden, um ein auf der Komponente verschlüsselt zu speicherndes Programm oder Daten zu verschlüsseln.

3. Vorrichtung gemäß Anspruch 1 oder 2, bei der die Messeinrichtung (14) eingerichtet ist, um die komplexe Impedanz zu messen, wobei sich die komplexe Impedanz aus einem Widerstand, einer Kapazität und einer Induktivität der Schaltungsstrukturen (13) ergibt.

4. Vorrichtung gemäß einem der vorangegangenen Ansprüche, bei der die Messeinrichtung (14) ausgebildet ist, um komplexe Impedanzwerte zwischen einzelnen Leiterbahnen der Schaltungsstrukturen (13) zu erfassen.

5. Vorrichtung gemäß einem der vorangehenden Ansprüche, bei der die Messeinrichtung (14) ausgelegt ist, um die Schaltungsstrukturen (13) mit in Amplitude und/oder Frequenz variierenden Spannungsverläufen zu beaufschlagen und die Systemantwort der Schaltungsstrukturen zu empfangen.

6. Vorrichtung einem der vorangehenden Ansprüche, bei der der Träger (12) und die Schaltungsstrukturen (13) eine solche Flexibilität aufweisen, dass der Träger (12) mit den Schaltungsstrukturen (13) auf einer unebenen Oberfläche der Komponente anbringbar ist.

7. Vorrichtung gemäß einem der Ansprüche 1 bis 6, bei der der Träger (12) in Form einer Folie zu schützende Bereichen der Komponente abdeckend angeordnet ist, so dass ein Zugriff auf die zu schützenden Bereiche von außen ohne eine Verformung des Trägers verhindert ist.

8. Vorrichtung gemäß einem der Ansprüche 1 bis5, bei der der Träger (12) ein elektronisches Siegel darstellt, und bei der die Steuerung (27) konfiguriert ist, um abhängig davon, ob das erste Ergebnis mit dem zweiten Ergebnis übereinstimmt, zu beurteilen, ob das elektronische Siegel gebrochen wurde.

9. Vorrichtung gemäß Anspruch 8, bei der der Träger (12) über zwei zueinander beweglichen Teilen (42;46) der Komponente angeordnet ist.

10. Vorrichtung gemäß einem der vorangehenden Ansprüche, bei der die Messeinrichtung (14) ausgebildet ist, um wiederholt die Impedanz der Schaltungsstruktur (13) zu messen, um weitere Ergebnisse zu erhalten, und bei der die Steuerung (27) ausgelegt ist, um einen Neustart oder Power-Reset der Komponente zu veranlassen, wenn ein weiteres Ergebnis nicht mit dem ersten oder einem vorherigen Ergebnis übereinstimmt.

11. Vorrichtung gemäß einem der vorangehenden Ansprüche, bei der die Steuerung (27) ausgelegt ist, um die Komponente in einen abgesicherten Modus, in dem keine entschlüsselten Programmsequenzen oder Daten benötigt werden, zu versetzen, wenn ein weiteres Ergebnis nicht mit dem ersten oder einem vorherigen Ergebnis übereinstimmt.

12. Vorrichtung gemäß einem der Ansprüche 1 bis 11, wobei eine Schaltung, welche die Schaltungsstrukturen (13) aufweist, differenziell aufgebaut ist.

13. Vorrichtung gemäß einem der Ansprüche 1 bis 12, wobei die Schaltungsstrukturen (13) durch gedruckte Elektroden realisiert sind.

14. Vorrichtung gemäß einem der Ansprüche 1 bis 13, wobei der Träger (12) aus einem Trägermaterial besteht, in das leitendes und/oder nichtleitendes Granulat eingebracht ist.

15. Vorrichtung gemäß einem der Ansprüche 1 bis 14, wobei die Vorrichtung eine Kommunikationsschnittstelle aufweist, die dazu ausgebildet ist, Kommunikationspartnern eines Gesamtsystems eine Nichtübereinstimmung zwischen einer Messung und einer vorherigen Messung bezüglich der Impedanzwerte des Trägers (12) mit Schaltungsstrukturen (13) zu kommunizieren.

16. Vorrichtung gemäß einem der vorangehenden Ansprüche, bei der eine Schutzeinrichtung (34) über dem Träger (12) vorgesehen ist, welche ausgebildet ist, um den Träger (12) und somit die gemessenen Impedanzwerte vor Beeinflussungen und/oder Veränderungen während des normalen Betriebs zu schützen.

17. Vorrichtung gemäß einem der vorangehenden Ansprüche, wobei der Träger (12) an einem Stecker (64) und/oder einer Steckerbuchse (72) gebildet ist und bei der ein Steckvorgang des Steckers (64) mit der Buchse (72) anhand der durch den Einsteck- und/oder Aussteckvorgang bewirkten Veränderungen am Trägermaterial und/oder an der Schaltungsstruktur (13) durch die Steuerung (27) anhand veränderter Messwerte der Messeinrichtung (14) detektiert werden können.

18. Verfahren mit folgenden Schritten:
Messen einer komplexen Impedanz von Schaltungsstrukturen (13) auf einem Träger (12) zu einem zweiten Zeitpunkt, um ein zweites Ergebnis zu erhalten; wobei die komplexe Impedanz eine zweidimensionale Größe mit einem von null verschiedenen Imaginärteil und einem von null verschiedenen Realteil ist, und der Realteil und der Imaginärteil der komplexen Impedanz der Schaltungsstrukturen erfasst wird;
Ermöglichen eines Betriebs einer Komponente oder Beurteilen, ob ein unberechtigter Zugriff auf die Komponente stattgefunden hat, abhängig davon, ob das zweite Ergebnis mit einem zu einem ersten Zeitpunkt gemessenen ersten Ergebnis übereinstimmt;
Ableiten eines kryptografischen Schlüssels aus dem zweiten Ergebnis; und
Entschlüsseln eines auf der Komponente gespeicherten verschlüsselten Programms abschnittsweise oder vollständig mit dem kryptografischen Schlüssel.

## Claims

1. Apparatus, comprising:
a carrier (12) with circuit structures (13) comprising a complex impedance;
a measurement means (14) configured to measure the complex impedance of the circuit structures (13) at a first time to get a first result, and at a later second time to get a second result;
a control (27) configured to enable operation of a component or to judge whether unauthorized access to the component has taken place, in dependence on whether the first result matches the second result;
wherein the control (27) is configured to derive a cryptographic key from the second result; and
wherein the control (27) further comprises a cryptographic means configured to decrypt an encrypted program stored on the component section by section or completely with the cryptographic key;
wherein the complex impedance captured by the measuring means (14) is a two-dimensional quantity with an imaginary part unequal to zero and a real part unequal to zero, wherein the measuring means (14) is configured to capture the real part and the imaginary part of the complex impedance of the circuit structures (13).

2. Apparatus according to claim 1, wherein the cryptographic key is a second cryptographic key, and wherein the control (27) is configured to a first cryptographic key from the first result,
wherein the cryptographic means is configured to use the first cryptographic key to encrypt an program or data to be stored on the component in an encrypted manner.

3. Apparatus according to claim 1 or 2, wherein the measuring means (14) is configured to measure the complex impedance, wherein the complex impedance results from a resistance, a capacitance, and an inductance of the circuit structures (13).

4. Apparatus according to any of the preceding claims, wherein the measuring means (14) is configured to capture complex impedance values between individual conductor paths of the circuit structures (13).

5. Apparatus according to any of the preceding claims, wherein the measurement means (14) is configured to provide the circuit structures (13) with voltage curves varying in amplitude and/or frequency and to receive the system response of the circuit structures.

6. Apparatus according to any of the preceding claims, wherein the carrier (12) and the circuit structures (13) comprise such a flexibility that the carrier (12) with the circuit structures (13) can be mounted on an uneven surface of the component.

7. Apparatus according to any of claims 1 to 6, wherein the carrier (12) is arranged in the shape of a foil covering areas of the component to be protected, such that access to the areas to be protected from the outside without deforming the carrier is prevented.

8. Apparatus according to any of claims 1 to 5, wherein the carrier (12) represents an electronic seal, and wherein the control (27) is configured to judge, in dependence on whether the first result matches the second result, whether the electronic seal has been broken.

9. Apparatus according to claim 8, wherein the carrier (12) is arranged above two parts (42; 46) of the component that are movable relative to one another.

10. Apparatus according to any of the previous claims, wherein the measurement means (14) is configured to repetitively measure the impedance of the circuit structure (13) for receiving further results, and wherein the control (27) is configured to prompt a restart or a power reset of the component when a further result does not match the first or a previous result.

11. Apparatus according to any of the previous claims, wherein the control (27) is configured to put the component into a secure mode in which no decrypted program sequences or data are necessitated when a further result does not match the first or a previous result.

12. Apparatus according to any of claims 1 to 11, wherein a circuit comprising the circuit structures (13) is structured differentially.

13. Apparatus according to any of claims 1 to 12, wherein the circuit structures (13) are realized by printed electrodes.

14. Apparatus according to any of claims 1 to 13, wherein the carrier (12) consists of a carrier material into which conductive and/or non-conductive granulate is introduced.

15. Apparatus according to any of claims 1 to 14, wherein the apparatus comprises a communication interface configured to communicate, to communication partners of an overall system, a mismatch between a measurement and a previous measurement with respect to the impedance values of the carrier (12) with circuit structures (13).

16. Apparatus according to any of the previous claims, wherein a protective means (34) is provided above the carrier (12), which his configured to protect the carrier (12) and hence the measured impedance values from influences and/or changes during normal operation.

17. Apparatus according to any of the previous claims, wherein the carrier (12) is formed at a connector (64) and/or a connector jack (72), and wherein a plugging process of the connector (64) with the jack (72) can be detected by the control (27) based on changed measurement values of the measurement means (14) due to the changes at the carrier material and/or at the circuit structure (13) caused by the plug-in or plug-out process.

18. Method, comprising:
measuring a complex impedance of circuit structures (13) on a carrier (12) at a second time to get a second result; wherein the complex impedance is a two-dimensional quantity with an imaginary part unequal to zero and a real part unequal to zero, and the real part and the imaginary part of the complex impedance of the circuit structures are captured;
enabling operation of a component or judging whether unauthorized access to the component has taken place, in dependence on whether the second result matches a first result measured at a first time;
deriving a cryptographic key from the second result; and
decrypting an encrypted program stored on the component section by section or completely with the cryptographic key.

## Revendications

1. Dispositif aux caractéristiques suivantes:
un support (12) avec des structures de circuit (13) qui présentent une impédance complexe;
un moyen de mesure (14) qui est conçu pour mesurer l'impédance complexe des structures de circuit (13) à un premier moment pour obtenir un premier résultat, et pour la mesurer à un deuxième moment ultérieur pour obtenir un deuxième résultat;
un moyen de commande (27) qui est configuré pour permettre un fonctionnement d'un composant ou pour évaluer s'il s'est produit un accès non autorisé au composant indépendamment du fait que le premier résultat coïncide ou non avec le deuxième résultat;
dans lequel le moyen de commande (27) est conçu pour dériver une clé cryptographique du deuxième résultat; et
dans lequel le moyen de commande (27) présente par ailleurs un moyen cryptographique qui est conçu pour décrypter par segment ou complètement un programme crypté mémorisé sur le composant à l'aide de la clé cryptographique;
dans lequel l'impédance complexe détectée par le moyen de mesure (14) est une grandeur bidimensionnelle avec une partie imaginaire différente de zéro et une partie réelle différente de zéro, dans lequel le moyen de mesure (14) est conçu pour détecter la partie réelle et la partie imaginaire de l'impédance complexe des structures de circuit (13).

2. Dispositif selon la revendication 1, dans lequel la clé cryptographique est une deuxième clé cryptographique, et dans lequel le moyen de commande (27) est conçu pour dériver une première clé cryptographique du premier résultat;
dans lequel le moyen cryptographique est conçu pour utiliser la première clé cryptographique pour crypter un programme ou des données à mémoriser de forme cryptée sur le composant.

3. Dispositif selon la revendication 1 ou 2, dans lequel le moyen de mesure (14) est conçu pour mesurer l'impédance complexe, dans lequel l'impédance complexe résulte d'une résistance, d'une capacité et d'une inductance des structures de circuit (13).

4. Dispositif selon l'une des revendications précédentes, dans lequel le moyen de mesure (14) est conçu pour détecter les valeurs d'impédance complexes entre les pistes conductrices individuelles des structures de circuit (13).

5. Dispositif selon l'une des revendications précédentes, dans lequel le moyen de mesure (14) est conçu pour soumettre les structures de circuit (13) à des courbes de tension variant en amplitude et/ou en fréquence et pour recevoir la réponse de système des structures de circuit.

6. Dispositif selon l'une des revendications précédentes, dans lequel le support (12) et les structures de circuit (13) présentent une flexibilité telle que le support (12) avec les structures de circuit (13) peut être placé sur une surface irrégulière du composant.

7. Dispositif selon l'une des revendications 1 à 6, dans lequel le support (12) est disposé en forme de film de manière à recouvrir les zones du composant à protéger, de sorte que soit empêché un accès aux zones à protéger depuis l'extérieur sans déformation du support.

8. Dispositif selon l'une des revendications 1 à 5, dans lequel le support (12) représente un sceau électronique, et dans lequel le moyen de commande (27) est configuré pour évaluer, indépendamment du fait que le premier résultat coïncide ou non avec le deuxième résultat, si le sceau électronique a été rompu ou non.

9. Dispositif selon la revendication 8, dans lequel le support (12) est disposé sur deux parties (42; 46) déplaçables l'une par rapport à l'autre du composant.

10. Dispositif selon l'une des revendications précédentes, dans lequel le moyen de mesure (14) est conçu pour mesurer de manière répétée l'impédance de la structure de circuit (13) pour obtenir d'autres résultats, et dans lequel le moyen de commande (27) est conçu pour provoquer un redémarrage ou une réinitialisation du courant d'alimentation du composant si un autre résultat ne coïncide pas avec le premier résultat ou un résultat précédent.

11. Dispositif selon l'une des revendications précédentes, dans lequel le moyen de commande (27) est conçu pour déplacer le composant dans un mode sécurisé dans lequel ne sont pas requises de séquences de programme ou de données décryptées si un autre résultat ne coïncide pas avec le premier résultat ou un résultat précédent.

12. Dispositif selon l'une des revendications 1 à 11, dans lequel un circuit qui présente les structures de circuit (13) est construit de manière différentielle.

13. Dispositif selon l'une des revendications 1 à 12, dans lequel les structures de circuit (13) sont réalisées par des électrodes imprimées.

14. Dispositif selon l'une des revendications 1 à 13, dans lequel le support (12) est constitué d'un matériau de support dans lequel est introduit un matériau granulaire conducteur et/ou non conducteur.

15. Dispositif selon l'une des revendications 1 à 14, dans lequel le dispositif présente une interface de communication qui est conçue pour communiquer aux partenaires de communication d'un système global une discordance entre une mesure et une mesure précédente en ce qui concerne les valeurs d'impédance du support (12) avec les structures de circuit (13).

16. Dispositif selon l'une des revendications précédentes, dans lequel est prévu sur le support (12) un moyen de protection (34) qui est conçu pour protéger le support (12) et, de ce fait, les valeurs d'impédance mesurées contre les influences et/ou les modifications pendant le fonctionnement normal.

17. Dispositif selon l'une des revendications précédentes, dans lequel le support (12) est formé sur une fiche (64) et/ou une prise de courant (72) et dans lequel une opération de branchement de la fiche (64) avec la prise de courant (72) peut être détectée sur base des modifications provoquées par l'opération de branchement et/ou l'opération de débranchement sur le matériau de support et/ou sur la structure de circuit (13) par le moyen de commande (27) sur base des valeurs de mesure modifiées du moyen de mesure (14).

18. Procédé aux étapes suivantes consistant à:
mesurer une impédance complexe des structures de circuit (13) sur un support (12) à un deuxième moment pour obtenir un deuxième résultat; où l'impédance complexe est une grandeur bidimensionnelle présentant une partie imaginaire différente de zéro et une partie réelle différente de zéro, et où sont détectées la partie réelle et la partie imaginaire de l'impédance complexe des structures de circuit;
permettre un fonctionnement d'un composant ou évaluer s'il s'est produit un accès non autorisé au composant indépendamment du fait que le deuxième résultat coïncide ou non avec le premier résultat à un premier résultat mesuré à un premier moment;
dériver une clé cryptographique du deuxième résultat; et
décrypter un programme crypté mémorisé sur le composant par segment ou complètement à l'aide de la clé cryptographique.
